# EUROPEAN PATENT SPECIFICATION

(11) **EP 2 990 658 B1**
(45) Date of publication and mention of the grant of the patent: **10.04.2019**
(21) Application number: 14787993.6
(22) Date of filing: 22.04.2014
(51) Int. Cl.: F04D 25/14, F24F 13/10, F24F 7/013, F04D 29/40, F04D 29/62, F04D 29/42, F24F 13/14

(54) **DAMPER-INTEGRATED BLOWER HAVING IMPROVED AIRTIGHTNESS**
GEBLÄSE MIT INTEGRIERTEM DÄMPFER UND VERBESSERTER LUFTDICHTIGKEIT
SOUFFLANTE A REGISTRE INTEGRE AYANT UNE ETANCHEITE A L'AIR AMELIOREE

(30) Priority: 25.04.2013 KR 20130046093
(43) Date of publication of application: 02.03.2016
(73) Proprietor: Cendori Co., Ltd., Mokpo-si Jeollanam-do 530-410 (KR)
(72) Inventor: PARK, Mun su, Gwangju 500-902 (KR)
(74) Representative: dompatent von Kreisler Selting Werner - Partnerschaft von Patent- und Rechtsanwälten mbB
(86) International application number: PCT/KR2014/003495
(87) International publication number: WO 2014/175629

(56) References cited:
- CN-A- 101 285 477
- DE-A1- 10 029 097
- JP-A- H04 208 347
- KR-A- 20070 015 263
- KR-A- 20070 016 235
- KR-A- 20120 101 811
- KR-U- 980 028 857
- KR-Y1- 200 353 379

## Description

### [Technical Field]

The present invention relates to a damper-integrated blower that is applied to cut off the air introduced into a heat recovery ventilator, and more particularly, to a damper-integrated blower having improved airtightness that is capable of performing a ventilating operation, through which fresh outdoor air is moved into indoor air, while keeping the heat energy of the indoor air.

### [Background Art]

So as to improve the quality of indoor air, generally, deodorization or dust collection is conducted by means of negative ion air purifiers or electric dust collectors, and recently, heat recovery ventilators, which serve as indoor and outdoor air ventilation systems allowing for the loss of indoor heat energy, have been introduced. The heat recovery ventilators are classified into duct type ceiling mounted ventilators, ductless floor mounted ventilators, and window mounted ventilators.

Among them, the duct type ceiling mounted heat recovery ventilators cause large amount of fan motor power consumption due to the generation of static pressure from the duct and need a relatively high installation cost. Accordingly, compact and slim type heat recovery ventilators, which can be installed on windows or window frames, have been recently proposed. The heat recovery ventilator largely includes a total heat exchange element for exchanging the total heat between indoor air and outdoor air and supply and exhaust means like an exhaust blower for exhausting the indoor air and a supply blower for supplying the outdoor air. In this
case, a blower type supply and exhaust means having low noise is generally adopted in the compact and slim type heat recovery ventilator.

When the heat recovery ventilator does not operate, by the way, a damper is generally mounted on the supply and exhaust grills to block the indoor and outdoor air, and in this case, it is actually hard to apply the damper to the compact and slim type heat recovery ventilators.

### [Prior Art Documents]

(First Patent Document) KR 20-0424420 Y1 (2006.08.14)
(Second Patent Document) KR 20-0353379 Y1 (2004.06.03)
(Third Patent Document) KR 20-0054122 Y1 (1991.01.28)
(Fourth Patent Document) KR 20-0442683 Y1 (2008.11.25)
(Fifth Patent Document) KR 10-1236422 B1 (2013.02.18)

CN101285477 describes a ventilator, comprising a frame and a snail shell provided with a fan and a fan blade. An outlet of the ventilation is provided with a switch curtain at the outlet of the snail shell, the curtain being fixed by a shaft at the outlet of the snail shell, wherein the electromagnet sucks the iron block and maintains the opening state of the switch curtain when the electromagnet is operated on the outside of the snail shell.

### [Disclosure]

### [Technical Problem]

Accordingly, the present invention has been made in view of the above-mentioned problems occurring in the prior art, and it is an object of the present invention to provide a damper-integrated blower having improved airtightness that is capable of performing a ventilating operation, through which fresh outdoor air is moved into indoor air, while keeping the heat energy of the indoor air, and that is improved in a damper blower as disclosed in Korean Patent No. 10-123622 filed by the same applicant as the invention, which is applied to a compact and slim type heat recovery ventilator having the installation space on a window or window frame so as to block the air introduced thereinto, the conventional damper blower having a damper module formed of a plurality of vanes laid on each other in such a manner as to be open and closed.

It is another object of the present invention to provide a damper-integrated blower having improved airtightness that is capable of solving conventional problems, such as the reduction of airtightness in gaskets laid on each other if foreign materials and dust are accumulated on the gaskets of the plurality of vanes, the generation of noise due to the resistance of air flow, the failure in the simple outer appearance design due to the protrusions of vane holes into which vane rotary shafts of the vanes are inserted and connection rods operated cooperatively with a set of rotary arms of each vane from the exterior of the casing, and high manufacturing cost, and the like.

### [Technical Solution]

To accomplish the above-mentioned objects, according to the present invention, there is provided a damper-integrated blower according to claim 1 having improved airtightness.

### [Advantageous Effects]

According to the present invention, the damper-integrated blower having improved airtightness is configured wherein the vane module as a single plate is mounted integrally with the exhaust port, unlike the conventional practice wherein a plurality of vanes laid on each other are operated cooperatively with each other, thus removing the reduction of wind pressure and the generation of noise caused by the vanes during the outdoor air is sucked or the indoor air is exhausted.

In case of conventional blowers, further, a rotary arm, a connection rod hinge shaft, and a connection rod having a connection rod hinge hole, which are fitted cooperatively to each other, are mounted on the exterior of the casing, but the damper-integrated blower according to the present invention has only the damper motor mounted on the exterior thereof, thus making the blower compact and simple in configuration.

Accordingly, the damper-integrated blower according to the present invention is useful in the application to heat recovery ventilators for windows or window frames having small installation spaces and further applicable to all kinds of blowers that perform a ventilating operation through which fresh outdoor air is moved into indoor air, while keeping the heat energy of the indoor air, so that upon the application, the number of parts of the blower can be remarkably reduced to save the manufacturing cost.

### [Description of Drawings]

FIG.1 is a perspective view showing the assembled state of a damper-integrated blower having improved airtightness according to the present invention.
FIG.2 is an exploded perspective view showing the assembled state of the main parts of the damper-integrated blower according to the present invention.
FIG.3 is an exploded perspective view showing partially cut-off main parts of the damper-integrated blower according to the present invention.
FIG.4 is a separate perspective view showing the assembled state of a vane module as a main part of the damper-integrated blower according to the present invention.
FIG.5 is a sectional view showing the cut-off state of the damper when blowing stops and the open state of the damper while the blowing is being conducted.

### [Best Mode for Invention]

Hereinafter, an explanation on a damper-integrated blower having improved airtightness according to the present invention will be in detail given with reference to the attached drawings.

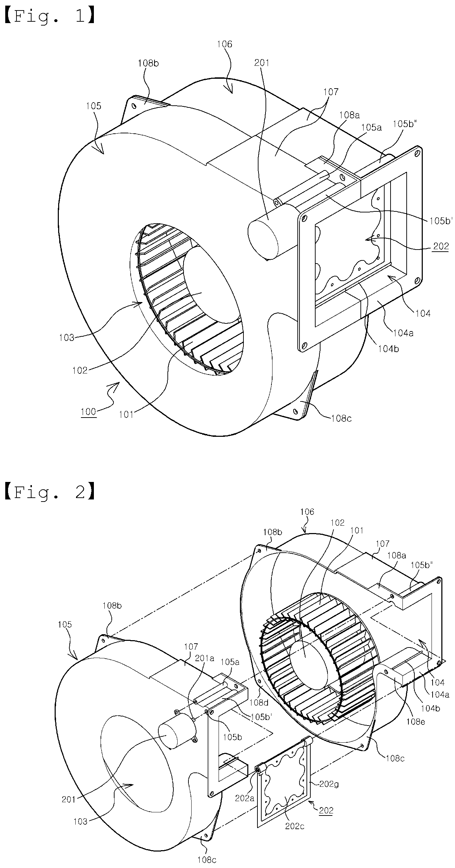

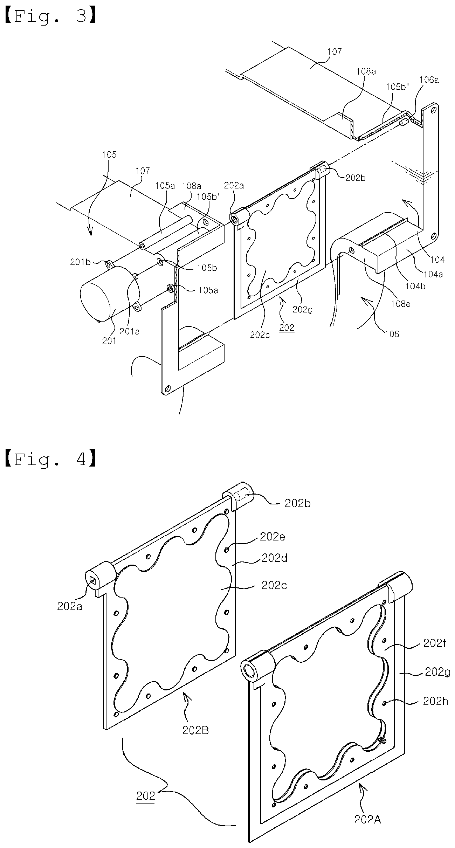

FIG.1 is a perspective view showing the assembled state of a damper-integrated blower having improved airtightness according to the present invention, FIG.2 is an exploded perspective view showing the assembled state of the main parts of the damper-integrated blower according to the present invention, FIG.3 is an exploded perspective view showing partially cut-off main parts of the damper-integrated blower according to the present invention, and FIG.4 is a separate perspective view showing the assembled state of a vane module as a main part of the damper-integrated blower according to the present invention.

According to the present invention, a damper-integrated blower 100 includes a blower fan 101 embedded in a shaft center of a suction port 103 formed on the side peripheral surface thereof and an exhaust port 104 having a fixing frame 104a.

The blower 100 according to the present invention has a blower casing a 105 on which the suction port 103 is formed and a blower casing b 106 located at the opposite side to the blower casing b 105, so that the outer periphery of the blower casing a 105 and the outer periphery of the blower casing b 106 are fastened to each other by means of a plurality of casing assembling protruding pieces 108a, 108b, 108c, 108d, and 108e.

A vane stopper protrusion 104b is formed at the center of the bottom surface of the exhaust port 104 of the assembled blower 100, and a vane contact housing part 107 is formed above the exhaust port 104, while having the same size as the exhaust port 104.

Damper motor screw fixing parts 105a are formed integrally with the outer upper surface of the vane contact housing part 107 adjacent to the exhaust port 104 of the blower casing a 105 on which the suction port 103 is formed and on the surface adjacent to the rear side of the upper side of the fixing frame 104a of the exhaust port 104.

A damper motor shaft hole 105b is bored in the outer peripheral surface of the casing of the suction port 103 of a damper motor shaft hole protrusion part 105b' which is integrally formed on the outer upper side of the vane contact housing part 107 adjacent to the damper motor screw fixing parts 105a of the blower casing a 105.

A vane rotation shaft 106a protrudes from the inner surface of a damper motor shaft hole protrusion part 105b" of the blower casing b 106 facing the damper motor shaft hole protrusion part 105b' of the blower casing a 105.

An eccentric damper motor shaft 201a of a damper motor 201 is introduced into the damper motor shaft hole 105b of the blower casing a 105 so as to connect damper motor fixing brackets 210b facing the damper motor shaft hole 105b with the blower casing a 105.

A vane 202B, which is made of fluorocarbon resin having a shape of a plate as a single member for opening and closing the exhaust port 104, is connected to the damper motor shaft 201a, and the vane rotation shaft 106a located on the inner surface of the damper motor shaft hole protrusion part 105b", and a gasket 202A, which is made of a rubber material, is coupled to the four edges of the vane 202B, thus providing a vane module 202 having the vane 202B and the gasket 202A assembled integrally with each other, and the damper motor 201 is adapted to open and close the vane module 202.

The vane 202B may further include: a square key hole 202a formed on one end of a rod formed on both ends of the upper side edge thereof; a rotary shaft hole 202b formed on the other end of the rod thereof; a rounded gasket assembling part 202d having a plurality of gasket assembling protrusions 202e formed thereon; and a vane protrusion 202c formed stepped higher than the gasket assembling part 202d from the inner sides of the four edges of the gasket assembling part 202d, so that the four edges of the vane protrusion 202c are assembled with the gasket 202A.

The gasket 202A may further include: a pocket-shaped gasket compressing part 202f formed on the four edges thereof; a plurality of gasket assembling holes 202h formed on the gasket compressing part 202f in such a manner as to be coupled to the gasket assembling protrusions 202e formed on the gasket assembling part 202d formed on the four edges of the vane 202B; and a sheet-shaped wind shielding frame 202g formed along the four outer edges of the gasket compressing part 202f.

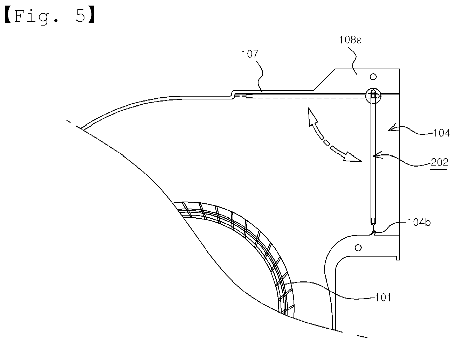

FIG.5 is a sectional view showing the cut-off state of the damper when blowing stops and the open state of the damper while the blowing is being conducted. Referring to FIG.5, an explanation on the airtightness improving operation of the damper-integrated blower according to the present invention will be given below.

The vane module 202 has a shape of a plate as a single member connected to the damper motor shaft 201a and the vane rotation shaft 106a located on the inner surface of the damper motor shaft hole protrusion part 105b" within the exhaust port 104 of the blower 100, so as to open and close the exhaust port 104, and at this time, if the blower fan 101 stops, the damper motor 201 operates to move the damper motor shaft 201a in a left direction in the drawing to allow the vane module 202 to be rotated by 90° in a counterclockwise direction by means of the vane rotary shaft 106a and the damper motor shaft 201a fitted to the square key hole 202a. Accordingly, the vane module 202 comes into close contact with the vane stopper protrusion 104b formed at the center of the bottom surface of the exhaust port 104, so that external air is not introduced into the exhaust port 105 by means of the gasket 202A having the wind shielding frame 202g formed on the four edges thereof, thereby improving the airtightness.

By the way, the damper motor 201 which is adapted to open and close the vane module 202 is a small-sized stepping motor, and if main power is applied to the damper motor 201, accordingly, the damper motor 201 is kept closed, without being open by means of wind pressure of the blower fan in the state where the exhaust port is open and external physical pressing or external wind in the state where the exhaust port is closed.

On the other hand, if the blower fan 101 operates to perform blowing, the vane module 202 which has closed the exhaust port 104 is rotated by 90° in a clockwise direction by means of the reverse rotation of the damper motor 201 and thus comes into close contact with the interior of the vane contact housing part 107, thus preventing the interference in the flow of the air discharged to the exhaust port 104. Accordingly, the problems occurring in the conventional blower wherein vanes are laid on each other and installed on the exhaust port, that is, the reduction of the wind pressure by means of the vanes and the generation of noise are completely solved.

The damper-integrated blower having improved airtightness according to the present invention is configured wherein the vane module is mounted integrally with the exhaust port, and accordingly, the configuration of the present invention is more compact than the conventional configuration wherein the damper is separately mounted on the blower casing performing the suction of outdoor air and the exhaust of indoor air.

According to the present invention, further, the blower casing a 105 and the blower casing b 106 of the blower 100 are formed integrally with each other, and accordingly, the vane module 202 can be applied to all kinds of blowers having two separated casings, that is, a suction port side casing and a casing located at the opposite to the suction port side casing.

In the conventional blower, particularly, a rotary arm, a connection rod hinge shaft, and a connection rod having a connection rod hinge hole, which are fitted cooperatively to each other, are mounted on the exterior of the casing, but the damper-integrated blower 100 according to the present invention has only the damper motor 201 mounted on the exterior thereof, thus being applicable to a heat recovery ventilator for a window or window frame having small installation space.

Further, if the damper-integrated blower 100 according to the present invention is applied to all kinds of blowers that perform a ventilating operation through which fresh outdoor air is moved into indoor air, while keeping the heat energy of the indoor air, the number of parts of the blower can be remarkably reduced to save the manufacturing cost.

**[Explanation of Reference Numerals]**

| | | | |
|---|---|---|---|
| 100: | blower | 101: | blower fan |
| 102: | fan motor | 103: | suction port |
| 104: | exhaust port | 104a: | fixing frame |
| 104b: | vane stopper protrusion | | |
| 105: | blower casing a | 105a: | damper motor screw fixing part |
| 105b: | damper motor shaft hole | 105b';105b": | damper motor shaft hole protrusion part |
| 106: | blower casing b | 107: | vane contact housing part |
| 108a, 108b, 108c, 108d, 108e: | | casing assembling protruding pieces | |
| 201: | damper motor | 201a: | damper motor shaft |
| 201b: | damper motor fixing bracket | | |
| 202: | vane module | 202A: | gasket |
| 202B: | vane | | |
| 202a: | square key hole | 202b: | rotary shaft hole |
| 202c: | vane protrusion | 202d: | gasket assembling part |
| 202e: | gasket assembling protrusion | 202f: | gasket compressing part |
| 202g: | wind shielding frame | | |
| 202h: | gasket assembling hole | | |

## Claims

1. A damper-integrated blower (100) having a blower fan (101) embedded in a center of a suction port (103) formed on the side peripheral surface thereof, an exhaust port (104) having a fixing frame (104a), and a vane (202b), the damper-integrated blower (100) comprising a blower casing a (105) on which the suction port (103) is formed and a blower casing b (106) located at the opposite side to the blower casing a (105), so that the outer periphery of the blower casing a (105) and the outer periphery of the blower casing b (106) are fastened to each other by means of a plurality of casing assembling protruding pieces (108a, 108b, 108c, 108d, 108e); where a vane stopper protrusion (104b) is formed at the center of the bottom surface of the exhaust port (104) of the assembled blower (100), and a vane contact housing part (107) is formed above the exhaust port (104), said vane contact housing part (107) having the same size as the exhaust port (104); damper motor screw fixing parts (105a) are formed integrally with the outer upper surface of the vane contact housing part (107) adjacent to the exhaust port (104) of the blower casing a (105) on which the suction port (103) is formed and on the surface adjacent to the rear side of the upper side of the fixing frame (104a) of the exhaust port (104); a damper motor shaft hole (105b) is bored in the outer peripheral surface of the casing of the suction port (103) of a damper motor shaft hole protrusion part (105b') which is integrally formed on the outer upper side of the vane contact housing part (107) adjacent to the damper motor screw fixing parts (105a) of the blower casing a (105); a vane rotation shaft (106a) protrudes from the inner surface of a damper motor shaft hole protrusion part (105b'') of the blower casing b (106) facing the damper motor shaft hole protrusion part (105b') of the blower casing a (105); an eccentric damper motor shaft (201a) of a damper motor (201) is introduced into the damper motor shaft hole (105b) of the blower casing a (105) so as to connect damper motor fixing brackets (201b) facing the damper motor shaft hole (105b) with the blower casing a (105); the vane (202b) is made of fluorocarbon resin having a shape of a plate as a single member for opening and closing the exhaust port (104), and is connected to the damper motor shaft (201a) and the vane rotation shaft (106a) located on the inner surface of the damper motor shaft hole protrusion part (105b''); a gasket (202a), which is made of a rubber material, is coupled to the four edges of the vane (202b), thus providing a vane module (202) having the vane (202b) and the gasket (202a) assembled integrally with each other, and the damper motor (201) is adapted to open and close the vane module (202).

2. The damper-integrated blower according to claim 1, wherein the vane (202b) comprises: a square key hole (202a) formed on one end of a rod formed on both ends of the upper side edge thereof; a rotary shaft hole (202b) formed on the other end of the rod thereof; a rounded gasket assembling part (202d) having a plurality of gasket assembling protrusions (202e) formed thereon; and a vane protrusion (202c) formed stepped higher than the gasket assembling part (202d) from the inner sides of the four edges of the gasket assembling part (202d), so that the four edges of the vane protrusion (202c) are assembled with the gasket (202a).

3. The damper-integrated blower according to claim 1, wherein the gasket (202a) comprises: a pocket-shaped gasket compressing part (202f) formed on the four edges thereof; a plurality of gasket assembling holes (202h) formed on the gasket compressing part (202f) in such a manner as to be coupled to the gasket assembling protrusions (202e) formed on the gasket assembling part (202d) formed on the four edges of the vane (202b); and a sheet-shaped wind shielding frame (202g) formed along the four outer edges of the gasket compressing part (202f).

## Patentansprüche

1. Gebläse (100) mit integriertem Dämpfer, mit einem Gebläseventilator (101), der in einen Mittenbereich eines Saugdurchlasses (103) eingebettet ist, welcher an der Seitenumfangsfläche des Gebläseventilators ausgebildet ist, einem Auslassdurchlass (104), der einen Fixierrahmen (104a) hat, und einem Flügel (202b), wobei das Gebläse (100) mit integriertem Dämpfer ein Gebläsegehäuse a (105), an dem ein Saugdurchlass (103) ausgebildet ist, und ein Gebläsegehäuse b (106) aufweist, das an der dem Gebläsegehäuse a (105) gegenüberliegenden Seite angeordnet ist, derart, dass der Außenumfang des Gebläsegehäuses a (105) und der Außenumfang des Gebläsegehäuses b (106) mittels mehrerer Gehäusemontage-Vorsprungsteile (108a,108b,108c,108d,108e) aneinander befestigt sind; wobei ein Flügelstoppvorsprung (104b) an der Mitte der Bodenfläche des Auslassdurchlasses (104) des zusammengefügten Gebläses (100) ausgebildet ist und ein Flügelkontakt-Gehäuseteil (107) über dem Auslassdurchlass (104) ausgebildet ist, wobei der Flügelkontakt-Gehäuseteil (107) die gleiche Größe wie der Auslassdurchlass (104) hat; Klappenmotor-Schraubenfixierteile (105a) einteilig mit der äußeren oberen Fläche des Flügelkontakt-Gehäuseteils (107) angrenzend an den Auslassdurchlass (104) des Gebläsegehäuses a (105), an dem der Saugdurchlass (103) ausgebildet ist, und an der Oberfläche ausgebildet sind, die an die Rückseite der oberen Seite des Fixierrahmens (104a) des Auslassdurchlasses (104) angrenzt; ein Klappenmotorwellenloch (105b) in die äußere Umfangsfläche des Gehäuses des Saugdurchlasses (103) eines Klappenmotorwellenloch-Vorsprungsteils (105b') gebohrt ist, das einteilig an der äußeren oberen Seite des Flügelkontakt-Gehäuseteils (107) angrenzend an die Klappenmotor-Schraubenfixierteile (105a) des Gebläsegehäuses a (105) ausgebildet ist, eine Flügeldrehwelle (106a) von der Innenfläche eines Klappenmotorwellenloch-Vorsprungsteils (105b") des Gebläsegehäuses b (106) absteht, die dem Klappenmotorwellenloch-Vorsprungsteil (105b') des Gebläsegehäuses a (105) gegenüberliegt; wobei eine exzentrische Klappenmotorwelle (201a) des Klappenmotors (201) in das Klappenmotorwellenloch (105b) des Gebläsegehäuses a (105) eingeführt ist, derart, dass dem Klappenmotorwellenloch (105b) gegenüberliegende Klappenmotorfixierbügel (201b) mit dem Gebläsegehäuse a (105) verbunden sind; wobei der Flügel (202b) aus Fluorcarbonharz in Form einer Platte als einstückiges Teil zum Öffnen und Schließen des Auslassdurchlasses (104) ausgebildet ist und mit der Klappenmotorwelle (201a) verbunden ist und die Flügeldrehwelle (106a) an der Innenfläche des Dämpfermotorwellenloch-Vorsprungsteils (105b") angeordnet ist; wobei eine Dichtung (202a), die aus einem Gummimaterial besteht, mit den vier Rändern des Flügels (202b) verbunden ist, wodurch ein Flügelmodul (202) gebildet ist, bei dem der Flügel (202b) und die Dichtung (202a) einteilig miteinander zusammengefügt sind, und der Klappenmotor (201) in der Lage ist, das Flügelmodul (202) zu öffnen und zu schließen.

2. Gebläse mit integriertem Dämpfer nach Anspruch 1, bei dem der Flügel (202b) aufweist: ein quadratisches Schlüsselloch (202a), das an einem Ende einer Stange ausgebildet ist, die an beiden Enden des oberen Seitenrands des Flügels angeordnet ist; ein Drehwellenloch (202b), das an dem anderen Ende der Stange des Flügels ausgebildet ist; einen runden Dichtungsmontageteil (202d), an dem mehrere Dichtungsmontagevorsprünge (202e) ausgebildet sind; und einen Flügelvorsprung (202c), der abgestuft höher als die Dichtungsmontageteil (202d) von den Innenseiten der vier Ränder des Dichtungsmontageteils (202d) ausgebildet ist, derart, dass die vier Ränder des Flügelvorsprungs (202c) mit der Dichtung (202a) zusammengefügt sind.

3. Gebläse mit integriertem Dämpfer nach Anspruch 1, bei dem die Dichtung (202a) aufweist: einen taschenförmigen Dichtungskompressionsteil (202f), der an vier Rändern des Gebläses ausgebildet ist; mehrere Dichtungsmontagelöcher (202h), die in dem Dichtungskompressionsteil (202f) derart ausgebildet sind, dass sie mit den Dichtungsmontagevorsprüngen (202e) verbindbar sind, die an dem Dichtungsmontageteil (202d), das an den vier Rändern des Flügels (202b) vorgesehen ist, ausgebildet sind; und einen blattförmigen Windschutzrahmen (202g), der an den vier äußeren Rändern des Dichtungskompressionsteils (202f) ausgebildet ist.

## Revendications

1. Soufflante à intégration d'amortisseur (100) comportant un ventilateur de soufflante (101) incorporé dans un centre d'une lumière d'aspiration (103) formée sur la surface périphérique latérale de celle-ci, une lumière d'échappement (104) ayant un cadre de fixation (104a), et une aube (202b), la soufflante à intégration d'amortisseur (100) comprenant un carter de soufflante a (105) sur lequel la lumière d'aspiration (103) est formée et un carter de soufflante b (106) situé du côté opposé au carter de soufflante a (105),
de sorte que la périphérie externe du carter de soufflante a (105) et la périphérie externe du carter de soufflante b (106) soient assujetties l'une à l'autre au moyen d'une pluralité de pièces protubérantes d'assemblage de carter (108a, 108b, 108c, 108d, 108e) ; où une protubérance d'arrêt d'aube (104b) est formée au niveau du centre de la surface de dessous de la lumière d'échappement (104) de la soufflante (100) assemblée,
et une partie de logement de contact avec l'aube (107) est formée au-dessus de la lumière d'échappement (104), ladite partie de logement de contact avec l'aube (107) ayant la même taille que la lumière d'échappement (104) ;
des parties de fixation de vis de moteur amortisseur (105a) sont formées solidairement avec la surface supérieure externe de la partie de logement de contact avec l'aube (107) adjacente à la lumière d'échappement (104) du carter de soufflante a (105) sur lequel la lumière d'aspiration (103) est formée et sur la surface adjacente au côté arrière du côté supérieur du cadre de fixation (104a) de la lumière d'échappement (104) ; un trou d'arbre de moteur amortisseur (105b) est alésé dans la surface périphérique externe du carter de la lumière d'aspiration (103) d'une partie de protubérance de trou d'arbre de moteur amortisseur (105b') qui est formée solidairement sur le côté supérieur externe de la partie de logement de contact avec l'aube (107) adjacente aux parties de fixation de vis de moteur amortisseur (105a) du carter de soufflante a (105) ;
un arbre de rotation d'aube (106a) fait saillie depuis la surface interne d'une partie de protubérance de trou d'arbre de moteur amortisseur (105b'') du carter de soufflante b (106) en regard de la partie de protubérance de trou d'arbre de moteur d'amortisseur (105b') du carter de soufflante a (105) ;
un arbre de moteur amortisseur excentrique (201a) d'un moteur amortisseur (201) est introduit dans le trou d'arbre de moteur amortisseur (105b) du carter de soufflante a (105) de façon à relier des consoles de fixation de moteur amortisseur (201b) en regard du trou d'arbre de moteur amortisseur (105b) avec le carter de soufflante a (105) ; l'aube (202b) est constituée d'une résine fluorocarbonée ayant une forme de plaque en tant qu'organe unique destiné à ouvrir et fermer la lumière d'échappement (104), et est reliée à l'arbre de moteur amortisseur (201a) et à l'arbre de rotation d'aube (106a) situé sur la surface interne de la partie de protubérance de trou d'arbre de moteur amortisseur (105b'') ; un joint d'étanchéité (202a), qui est constitué d'un matériau de caoutchouc, est couplé aux quatre bords de l'aube (202b), fournissant ainsi un module d'aube (202) dont l'aube (202b) et le joint d'étanchéité (202a) sont solidairement assemblés l'un avec l'autre, et le moteur amortisseur (201) est adapté pour ouvrir et fermer le module d'aube (202).

2. Soufflante à intégration d'amortisseur selon la revendication 1, dans laquelle l'aube (202b) comprend : une boutonnière carrée (202a) formée sur une extrémité d'une tige formée sur les deux extrémités du bord latéral supérieur de celle-ci ; un trou d'arbre rotatif (202b) formé sur l'autre extrémité de la tige ; une partie d'assemblage de joint d'étanchéité arrondie (202d) comportant une pluralité de protubérances d'assemblage de joint d'étanchéité (202e) formées dessus ; et une protubérance d'aube (202c) formée en étages plus haut que la partie d'assemblage de joint d'étanchéité (202d) à partir des côtés internes des quatre bords de la partie d'assemblage de joint d'étanchéité (202d), de sorte que les quatre bords de la protubérance d'aube (202c) soient assemblés avec le joint d'étanchéité (202a).

3. Soufflante à intégration d'amortisseur selon la revendication 1, dans laquelle le joint d'étanchéité (202a) comprend : une partie de compression de joint d'étanchéité en forme de poche (202f) formée sur les quatre bords de celui-ci ; une pluralité de trous d'assemblage de joint d'étanchéité (202h) formés sur la partie de compression de joint d'étanchéité (202f) de manière à être couplés aux protubérances d'assemblage de joint d'étanchéité (202e) formées sur la partie d'assemblage de joint d'étanchéité (202d) formée sur les quatre bords de l'aube (202b) ;
et un cadre pare-vent en forme de feuille (202g) formé le long des quatre bords externes de la partie de compression de joint d'étanchéité (202f).
